# EUROPÄISCHE PATENTSCHRIFT

(11) **EP 3 263 537 B1**
(45) Veröffentlichungstag und Bekanntmachung des Hinweises auf die Patenterteilung: **22.09.2021**
(21) Anmeldenummer: 16176347.9
(22) Anmeldetag: 27.06.2016
(51) Int. Cl.: C04B 35/626, C04B 37/02

(54) **VERFAHREN ZUR HERSTELLUNG EINES METALL-KERAMIK-SUBSTRATS**
METHOD FOR PRODUCING A METAL-CERAMIC SUBSTRATE
PROCEDE DESTINE A LA FABRICATION D'UN SUBSTRAT EN CERAMIQUE/METAL

(43) Veröffentlichungstag der Anmeldung: 03.01.2018
(73) Patentinhaber: Infineon Technologies AG, 85579 Neubiberg (DE)
(72) Erfinder: ROTH, Alexander, 93197 Zeitlarn (DE)
(74) Vertreter: Dilg, Haeusler, Schindelmann Patentanwaltsgesellschaft mbH

(56) Entgegenhaltungen:
- EP-A- 3 252 810
- EP-A1- 0 766 307
- EP-A1- 2 916 627
- WO-A1-2016/002609
- WO-A1-2016/020207
- US-A1- 2012 077 023
- US-A1- 2012 182 692
- US-A1- 2015 282 379
- US-B1- 6 232 657

## Beschreibung

Die vorliegende Erfindung betrifft ein Verfahren zur Herstellung eines doppelseitigen metallisierten Keramik-Substrats, wie im Anspruch 1 definiert.

Derartige Metall-Keramik-Substrate werden vorzugsweise im Bereich der Leistungshalbleitermodule verwendet. Dabei wird ein Keramik-Substrat, beispielsweise eine Aluminium-Oxid-Keramik, auf ihrer Ober- und Unterseite mit einer Metallisierung versehen, wobei in der Regel mindestens eine metallisierte Seite später eine beispielsweise durch Ätzprozesse erzeugte schaltungstechnische Struktur aufweist. Das bekannte Verfahren zur Herstellung dieser doppelseitig metallisierten Keramik-Substrate erfolgt durch eutektisches Bonden und wird allgemein als Direct-Bonding-Prozess bezeichnet.

Eine grundlegende Beschreibung eines Verfahrens zur Herstellung von metallisierten Keramik-Substraten durch Bondprozesse kann beispielsweise der EP 0 085 914 A2 entnommen werden. Zum Beispiel wird im Rahmen des Direct-Copper-Bonding-Prozesses (DCB-Prozess) eine Kupferfolie zunächst derartig oxidiert, dass sich eine im Wesentlichen gleichmäßige Kupferoxidschicht ergibt. Die resultierende Kupferfolie wird dann auf eine Oberflächenseite eines Keramik-Substrats positioniert und der Verbund aus Keramik-Substrat und Kupferfolie wird auf eine Bondtemperatur zwischen etwa 1025 °C und 1083 °C erhitzt, wodurch es zur Ausbildung eines metallisierten Keramik-Substrats kommt. Abschließend wird das metallisierte Keramik-Substrat abgekühlt.

Die Herstellung von doppelseitig metallisierten Keramik-Substraten kann entweder über einen zweistufigen Bondprozess, bei dem zunächst eine erste Oberflächenseite des Keramik-Substrats metallisiert wird und anschließend eine der ersten Oberflächenseite gegenüberliegende zweite Oberflächenseite des Keramik-Substrats metallisiert wird, oder alternativ über einen einstufigen Bondprozess erfolgen, bei dem beide Oberflächenseiten des Keramik-Substrats gleichzeitig metallisiert werden.

Beispielsweise ist in der DE 10 2010 023 637 B4 ein Verfahren zum Herstellen von doppelseitig metallisierten Keramik-Substraten in einem einzelnen Verfahrensschritt beschrieben, wobei eine erste Metallschicht, ein Keramik-Substrat und eine zweite Metallschicht nacheinander in der angegebenen Reihenfolge auf einem Träger bzw. einer Bondhilfe positioniert werden, wobei der Träger an der Oberseite, die der Anordnung aus der ersten und zweiten Metallschicht und dem Substrat zugewandt ist, eine Vielzahl von vorspringenden Ansätzen aufweist, die sich in Richtung der Anordnung aus der ersten und zweiten Metallschicht und dem Substrat verjüngen. Durch die Strukturierung des Trägers mit Spitzen soll erreicht werden, dass sich der Verbund von Metallschichten und Keramik-Substrat nach dem beidseitigen Bondprozess rückstandsfrei von dem Träger lösen lässt.

Des Weiteren ist aus der DE 10 2004 056 879 B4 ein Verfahren zum Herstellen von doppelseitig metallisierten Keramik-Substraten unter Verwendung des Direct-Bonding-Prozesses bekannt, bei welchem eine Anordnung aus mindestens zwei Metallschichten und einem zwischen den Metallschichten angeordneten Keramik-Substrat auf einem mit einer Trennschicht versehenen Träger bzw. Bondhilfe positioniert wird und dann die Anordnung auf eine Temperatur erwärmt wird, bei dem es zu einem Bonden der beiden Metallschichten mit dem Keramik-Substrat kommt. Durch die Verwendung einer entsprechenden Trennschicht soll es nicht zu einem Verbinden des Trägers mit der anliegenden Metallschicht der Anordnung kommen.

Die DE 10 2004 056 879 B4 fokussiert dabei auf die Verwendung von besonders ebenen Trägern, die eine Abweichung von einer ideal ebenen Platte von weniger als 0,2 % der Trägerlänge und/oder von weniger als 0,1 % der Trägerbreite aufweisen. Durch diese besonders hohen Anforderungen an den Träger soll die Herstellung von besonders flachen doppelseitig metallisierten Keramik-Substraten gelingen. Nichtsdestotrotz weisen die resultierenden doppelseitig metallisierten Keramik-Substrate eine Restbiegung auf, deren Orientierung undefiniert ist. Geht man darüber hinaus von einem kontinuierlichen Verfahren zur Herstellung von doppelseitig metallisierten Keramik-Substraten aus, wird die Orientierung der Restbiegung von Anordnung zu Anordnung variieren. Die Durchbiegung der resultierenden doppelseitig metallisierten Keramik-Substrate schwankt daher auch bei Anwendung der in der DE 10 2004 056 879 B4 beschriebenen Vorgehensweise sowohl in Längs-/Querrichtung als auch in der Höhe erheblich und ist darüber hinaus umorientiert.

Darüber hinaus weisen die resultierenden doppelseitig metallisierten Keramik-Substrate, die mit asymmetrischen Metalldicken (zum Beispiel Vorderseite Metalldicke 0,3 mm und Rückseite Metall dicke 0,2 mm) hergestellt werden, aufgrund der unterschiedlichen Metallvolumina auf den beiden Seiten des Substrats nach dem Bonden eine in Längs- und Querrichtung undefinierte Biegung auf, wobei in der Regel die dickere Metallschicht auf der konkaven Seite liegt.

Die aus diesen Problemen des Standes der Technik resultierenden Schwankungen in den Spezifikationen der resultierenden doppelseitig metallisierten Keramik-Substrate, insbesondere die Durchbiegung, können in den Nachfolgeprozessen sowie der Verarbeitung erhebliche negative Auswirkungen mit sich bringen und sind daher vorzugsweise zu vermeiden.

So ist des Weiteren aus der DE 196 15 481 C5 die Verwendung eines bei Raumtemperatur gewölbten, doppelseitig metallisierten Keramik-Substrats bekannt, das abgestützt auf seine Unterseite elastisch in die ebene Form zurückgebogen werden kann, so dass es aufgrund der elastischen Spannung der Keramikschicht dicht und fest gegen eine Fläche einer Metallpiatte angelegt werden kann, um eine optimale Kühlwirkung zu gewährleisten.

Außerdem beschreibt die DE 10 2014 215 377 A1 ein Verfahren zur Herstellung eines doppelseitig metallisierten Keramik-Substrats, bei welchem das Keramik-Substrat und die Metallschichten zu dessen Herstellung auf einem Träger positioniert werden, der geneigt und/oder gewölbt ist. Durch die Wölbung des Trägers soll auch das resultierende metallisierte Keramik-Substrat eine definierte, im Wesentlichen konstante Durchbiegung aufweisen.

WO 2016/020207A1 betrifft ein Verfahren zum Herstellen von doppelseitig metallisierten Keramik-Substraten.

EP 2 916 627 A1 betrifft ein Verfahren zum Herstellen einer keramischen Leiterplatte.

US 2012/0077023 A1 betrifft eine gesinterte Keramik und ein dieselbe aufweisendes Substrat für eine Halbleitervorrichtung.

US 6 232 657 B1 betrifft eine Siliziumnitrid-Leiterplatte und ein Halbleitermodul.

EP 0 766 307 A1 betrifft ein Siliziumnitrid-Schaltungssubstrat.

US 2012/0182692 A1 betrifft ein doppelseitiges Substrat, eine Halbleitervorrichtung und ein Verfahren für dieselbe.

US 2015/0282379 A1 betrifft ein Wärmesenkenbefestigtes Leistungsmodulsubstrat, ein Wärmesenkenbefestigtes Leistungsmodul und ein Verfahren zum Herstellen eines Wärmesenkenbefestigten Leistungsmodulsubstrats.

WO 2016/002609 A1 betrifft ein Verfahren zum Herstellen eines Keramik-Aluminium-gebondeten Körpers, ein Verfahren zum Herstellen eines Leistungsmodulsubstrats, einen Keramik-Aluminium-gebondeten Körper und ein Leistungsmodulsubstrat.

Vor diesem Hintergrund liegt der vorliegenden Erfindung die Aufgabe zugrunde, ein verbessertes Metall-Keramik-Substrat und ein Verfahren zu dessen Herstellung bereitzustellen, wobei das Metall-Keramik-Substrat eine vorherbestimmbare, definierte, das heißt eine stets einheitliche Vorzugsrichtung einer Durchbiegung, insbesondere im Wesentlichen bei Raumtemperatur, sowie eine definierte, das heißt vorherbestimmbare, temperaturgetriebene bzw. temperaturabhängige Änderung der Durchbiegung aufweisen soll, was insbesondere bei einem anschließenden Systemlöten bzw. Chiplöten oder bei der Verwendung in einem bodenlosen Modul eine Rolle spielt.

Diese Aufgabe wird durch ein Verfahren gemäß Anspruch 1 gelöst. Weitere, besonders vorteilhafte Ausgestaltungen der Erfindung offenbaren die jeweiligen Unteransprüche.

Es ist darauf hinzuweisen, dass die in der nachfolgenden Beschreibung einzeln aufgeführten Merkmale in technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Es ist ferner darauf hinzuweisen, dass die nachfolgend beschriebene Erfindung auf jede Art von Substrat angewendet werden kann, zum Beispiel AIN (Aluminiumnitrid), Si₃N₄ (Siliziumnitrid), Al₂O₃ (Aluminiumoxid) und dergleichen, die mit einer Metallschicht, zum Beispiel Cu (Kupfer) oder Al (Aluminium), beschichtet sind. Hierbei kann die Metallisierung durch unterschiedliche Verfahren auf wenigstens eine Oberflächenseite des Substrats aufgebracht sein, zum Beispiel durch AMB (Active Metal Brazing), DCB (Direct Copper Bonding), DAB (Direct Aluminium Bonding), Dickschichtverfahren und dergleichen. Besonders bevorzugt werden hierbei DCB- und AMB-Keramik-Substrate. Hierin nachstehend wird der Begriff "Substrat" als Synonym für alle zuvor genannten Substratarten verwendet.

Erfindungsgemäß weist ein Metall-Keramik-Substrat eine Keramikplatte oder eine Keramikschicht und zwei an zwei gegenüberliegenden Oberflächenseiten der Keramikschicht flächig befestigte Metallschichten auf, wobei das Material der Keramikschicht in Richtung von der einen metallisierten Oberflächenseite zur anderen metallisierten Oberflächenseite beide Metallschichten unterschiedliche Dehngrenzen aufweisen. Mit anderen Worten wird eine gezielte, vorherbestimmbare Durchbiegung des Metall-Keramik-Substrats bei Raumtemperatur und ein gezielter, vorherbestimmbarer, temperaturabhängiger Verlauf der Durchbiegung erzielt, indem die jeweiligen Materialeigenschaften der beiden verwendeten Metallschichten (unterschiedliche Dehngrenzen) gezielt gewählt werden.

Als Metallschicht ist hierbei eine Schicht mit einem Metallanteil von wenigstens 50 % zu verstehen. Die Metallschicht kann darüber hinaus strukturiert sein (schaltungstechnisches Layout) oder nicht. Im Sinne der vorliegenden Erfindung ist unter der Dehngrenze die 0,2 %-Dehngrenze bzw. Elastizitätsgrenze R_{p0,2} zu verstehen. Die 0,2 %-Dehngrenze ist diejenige (einachsige) mechanische Spannung, bei der die auf die Anfangslänge der jeweiligen Metallschicht bezogene bleibende Dehnung nach Entlastung genau 0,2 % beträgt. Bei noch höherer Last kommt es zu ausgeprägten plastischen Verformungen der Metallschicht.

Wird beispielsweise die Vorderseite des keramischen Substrats mit einer Metallschicht einer hohen Dehngrenze und die Rückseite des Substrats mit einer Metallschicht einer niedrigen Dehngrenze beschichtet, zum Beispiel im Rahmen eines Direct-Bonding-Prozesses wie DCB, so wird dies über folgenden Mechanismus zu einer gerichteten Durchbiegung des resultierenden Metall-Keramik-Substrats führen:
Beim Abkühlen des Metall-Keramik-Substrats von der Prozess- bzw. Bondtemperatur > 800 °C durchlaufen beide Metallschichten, welche fest mit dem keramischen Substrat verbunden sind, plastische Deformationsprozesse. Dabei wird das Material mit einer hohen Dehngrenze nach Ende des Abkühlprozesses weniger Spannung durch plastische Verformung abbauen als das Material mit einer niedrigen Dehngrenze. Durch die Differenz der Spannungen von Vorderseite zu Rückseite des Metall-Keramik-Substrats ergibt sich eine einstellbare Durchbiegung des Substrats, welche sich durch die Materialparameter gezielt einstellen lässt. So wölbt sich das resultierende Metall-Keramik-Substrat bei Raumtemperatur in Richtung der Metallschicht mit der höheren Dehngrenze.

Dementsprechend weist das resultierende Metall-Keramik-Substrat eine vorherbestimmbare, definierte, das heißt eine stets einheitliche Vorzugsrichtung seiner Durchbiegung zum Beispiel bei Raumtemperatur sowie ebenso eine definierte, das heißt vorherbestimmbare, temperaturgetriebene bzw. temperaturabhängige Änderung der Durchbiegung auf.

Erfindungsgemäß kann zur Erzielung desselben Ziels das Material der Keramikschicht zusätzlich in Richtung von der einen metallisierten Oberflächenseite zur anderen metallisierten Oberflächenseite einen Dichtegradienten und somit eine Materialinhomogenität aufweisen. So lässt sich beispielsweise bei der Herstellung der Keramikschicht mittels des so genannten Tape-Casting-Prozesses, bei dem eine Lösungsmittel enthaltende Keramikaufschlämmung in einer dünnen Schicht auf eine flache, ebene Oberfläche, zum Beispiel einem Film bzw. einer Sinterhilfe, aufgetragen wird und anschließend getrocknet und gesintert wird, durch Erhöhen des Lösungsmittelanteils in der Keramikaufschlämmung ein Setzen der bereits gecasteten Aufschlämmung erreichen. Mit anderen Worten setzen sich durch den Gravitationseinfluss die größeren Partikel der Keramikaufschlämmung auf der Filmseite und die kleineren Partikel auf der Luftseite ab. Zusätzlich schwimmt das Lösungsmittel nach oben auf. Hierdurch entsteht ein Dichtegradient im Grünling, der auch nach dem Brennen fortbesteht und zu einer Vorzugsrichtung der Durchbiegung der Keramik führt. Höhe und Richtung der Durchbiegung unter Temperatureinfluss lassen sich durch die Wahl der Sinterhilfsstoffe, der Korngrößenverteilung der Keramikmischung, sowie dem gewählten Dichteunterschied im Grünling einstellen.

Gemäß der Erfindung weisen beide Metallschichten unterschiedliche Korngrößen auf. Über die Korngröße lässt sich die Dehngrenze jeder Metallschicht vorherbestimmen, selbst wenn die Metallschichten ansonsten eine identische Materialzusammensetzung aufweisen und zum Beispiel aus demselben Metall, beispielsweise Kupfer, gebildet sind. Außerdem können die beiden Metallschichten auch dieselbe Dicke aufweisen.

So weist zum Beispiel ein Metall-Keramik-Substrat, das auf seiner ersten Oberflächenseite mit einer ersten Kupferschicht mit einem groben Korn von zum Beispiel etwa 200 µm beschichtet ist und auf seiner zweiten Oberflächenseite mit einer zweiten Kupferschicht mit einem feinen Korn von zum Beispiel etwa 30 µm beschichtet ist, einen Unterschied von ca. 20 MPa in der Dehngrenze auf. Das resultierende Metall-Keramik-Substrat wölbt sich dann bei Raumtemperatur in Richtung des feinkörnigen Kupfers.

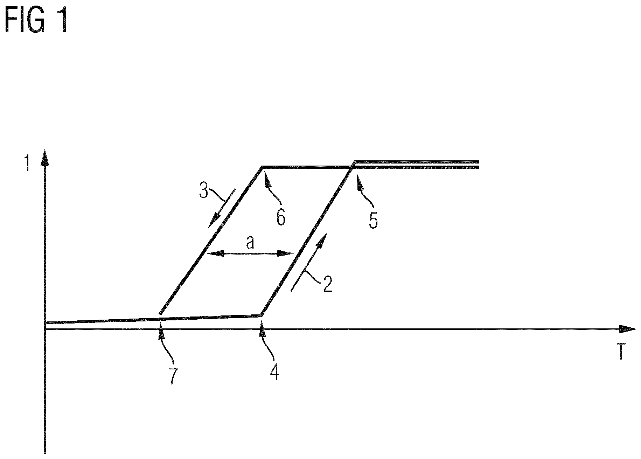

Beispielsweise ist bei einem durch einen DCB-Prozess hergestellten Metall-Keramik-Substrat dessen Durchbiegung als Funktion der Temperatur sowie die Hysterese-Funktion steuerbar. Angenommen wird ein komplett symmetrisches und perfekt flaches Metall-Keramik-Substrat mit einer Metallisierung auf seiner Oberseite mit R_{p0,2} = 50 MPa (Feinkorn) und auf seiner Unterseite mit R_{p0,2} = 30 MPa (Grobkorn) als einzige Asymmetrie. Durch Aufheizen dehnen sich die beiden Metallschichten gegenüber der Keramik stärker aus. Unter Vernachlässigung des Einflusses der Korngröße auf das E-Modul des Kupfers wird symmetriebedingt keine Verformung des Substrats auftreten, bis über die Temperatur und den Unterschied der thermischen Ausdehnungskoeffizienten die Dehngrenze der plastischeren Metallisierungsseite erreicht wird. Zu diesem Zeitpunkt beginnt der Spannungsabbau durch plastisches Fließen in der plastischeren Metallisierungsschicht, während die Metallisierungsschicht mit der höheren Dehngrenze noch weitgehend elastisch verformt. Somit verformt sich das Substrat konkav in Richtung der Metallisierung der höheren Dehngrenze. Bei weiterer Erhöhung der Temperatur und somit der Spannung zwischen den Metallisierungen und der Keramik wird dann auch die Dehngrenze der Metallisierungsseite mit der höheren Dehngrenze erreicht. Ab diesem Zeitpunkt verformen sich beide Metallisierungsschichten plastisch und die Steigung der Durchbiegung als Funktion der Temperatur flacht ab. Ein derartiges Verhalten ist stark idealisiert in der weiter unten erläuterten Fig. 1 veranschaulicht.

Gemäß der Erfindung wird ein Verfahren zur Herstellung eines Metall-Keramik-Substrats bereitgestellt, wobei das Metall-Keramik-Substrat eine Keramikplatte oder Keramikschicht und zwei an zwei gegenüberliegenden Oberflächenseiten der Keramikschicht flächig befestigte Metallschichten aufweist. Das Verfahren umfasst wenigstens die folgenden Schritte:
- Bereitstellen einer Keramikaufschlämmung auf einer Sinterhilfe,
- Erhitzen der Keramikaufschlämmung auf eine Sintertemperatur, zum Beispiel zwischen etwa 800 °C und 1400 °C, um eine Keramikschicht zu erhalten,
- Abkühlen der Keramikschicht,
- Belegen der ersten Oberflächenseite der Keramikschicht mit der ersten Metallschicht und/oder Belegen der der ersten Oberflächenseite gegenüberliegenden zweiten Oberflächenseite der Keramikschicht mit der zweiten Metallschicht,
- Erhitzen der in dem vorhergehenden Schritt gebildeten Anordnung aus der Keramikschicht und der/den Metallschicht/en auf eine Bondtemperatur, beispielsweise zwischen etwa 1025 °C und 1083 °C, zur Ausbildung eines Verbunds zwischen der Keramikschicht und der/den Metallschicht/en durch Bonden,
- Abkühlen der Anordnung aus der Keramikschicht und der/den Metallschicht/en,
- Wiederholen der vorhergehenden drei Schritte, falls bei diesen lediglich eine Oberflächenseite der Keramikschicht mit einer Metallschicht gebondet wurde, bis beide Oberflächenseiten der Keramikschicht mit jeweils einer Metallschicht gebondet sind,
wobei die Keramikschicht mit Metallschichten unterschiedlicher Dehngrenzen die mittels unterschiedlicher Korngrössen in beiden Metallschichten vorherbestimmt werden, gebondet wird.

Die Vorteile und Wirkungen eines solchen Verfahrens ergeben sich unmittelbar aus den bereits beschriebenen Vorteilen und Wirkungen des Metall-Keramik-Substrats und gelten somit analog auch für das erfindungsgemäße Herstellungsverfahren.

Die Keramikschicht wird mit Metallschichten unterschiedlicher Dehngrenzen gebondet. Hierbei wird die Dehngrenze der jeweiligen Metallschicht über die Korngröße der Metallschicht vorherbestimmt, wobei die Metallschichten auch aus demselben Metall, beispielsweise Kupfer, gebildet sein können und darüber hinaus auch dieselbe Dicke aufweisen können.

Eine vorteilhafte Ausgestaltung des Verfahrens sieht vor, dass die Keramikschicht zunächst nur mit einer Metallschicht belegt, erhitzt, das heißt gebondet, und abgekühlt wird, wobei das Abkühlen mit einem derart großen Temperaturgradienten dT/dt erfolgt, dass der Abbau thermomechanischer Spannungen zwischen der Metallschicht und der Keramikschicht durch plastisches Fließen der Metallschicht minimiert wird.

Allgemein lässt sich durch gezielte Abkühlkurven während des Bondens beispielsweise mittels des DCB-Prozesses die Verformung der Keramik im ersten Bond und damit die Asymmetrie einstellen. Herkömmlich wird während der Abkühlphase eine mehr oder weniger lange Rampe mit gleichbleibender Temperatur eingefügt. Es soll bei hoher Temperatur eine Relaxation der ersten Metallschicht, zum Beispiel des Kupfers, erfolgen und somit die Durchbiegung des einseitig gebondeten Halbfertigguts minimiert werden.

Erfolgt nun eine Abkühlung mit hohem Temperaturgradienten dT/dt gemäß der Erfindung, wird der Abbau der thermomechanische Spannung durch plastisches Fließen minimiert. Je höher der Temperaturgradient dT/dt im Bereich zwischen etwa 1050 °C bis etwa 700 °C ist, desto stärker wird die Keramik verformt (unter 700 °C kann eine Al₂O₃-Keramik keine plastischen Verformungen mehr in den Sinterhilfsstoffen durchführen; bei DCB-/AMB-Prozessen wird die Metallisierung bei hohen Bondtemperaturen auf die Keramik aufgebracht, wobei es je nach verwendeten Sinterhilfsstoffen zu "Memory-Effekten" der Keramik kommen kann (das Bulkmaterial verbleibt fest, die Sinterhilfsstoffe können unter mechanischer Beanspruchung fließen und behalten die Form nach der Abkühlung bei)). Durch die starke Verformung der einseitig gebondeten Keramik wird im fertigen Metall-Keramik-Substrat eine Vorzugsrichtung in konkaver Richtung der ersten gebondeten Metallschicht erzeugt.

Gemäß einer weiteren vorteilhaften Ausgestaltung des Verfahrens wird die Keramikschicht zunächst nur mit einer Metallschicht belegt, erhitzt und abgekühlt, wobei die Anordnung aus der Keramikschicht und der Metallschicht nach dem Abkühlen kaltverformt wird. Eine Kaltverformung des Substrats nach dem ersten oder zweiten Bondschritt führt dazu, dass das Substrat im Auslieferzustand flach ist, nach Temperaturexposition allerdings zu einem unkontrollierten Zustand der Komplanarität zurückkehrt. Die Erfinder haben nun erkannt, dass - wenn die Kaltverformung zwischen dem ersten und zweiten Bond angewendet wird - die Streuung des Durchbiegungsergebnisses im resultierenden Metall-Keramik-Substrat reduziert wird.

Eine noch weitere vorteilhafte Ausgestaltung des erfindungsgemäßen Verfahrens sieht vor, dass die Anordnung aus der Keramikschicht und der/den Metallschicht/en auf einer unterliegenden, gewölbten Bondhilfe erhitzt und gebondet wird. Wie bereits vorstehend beschrieben, sind die in der Keramik enthaltenen Sinterhilfsstoffe in der Lage, bei den hohen Bondtemperaturen unter mechanischer Beanspruchung zu fließen und die Form nach dem Abkühlen beizubehalten. Durch eine leichte Wölbung der unten liegenden Bondhilfe im ersten und/oder zweiten Bondschritt des herkömmlichen DCB-Verfahrens (oder äquivalent: der Bondhilfen im doppelseitigen Bondprozess) lässt sich dem resultierenden Metall-Keramik-Substrat eine räumlich klar definierte Vorzugsrichtung der Durchbiegung geben.

Eine weitere vorteilhafte Ausgestaltung des Verfahrens sieht vor, dass die Keramikaufschlämmung auf einer gewölbten Sinterhilfe erhitzt und gesintert wird. Das Brennen auf vorgekrümmten, gewölbten Sinterhilfen gibt den resultierenden keramischen Substraten eine gewünschte Form. Diese bleibt nach dem Brand erhalten. Die dreidimensionale Form der Durchbiegung, das heißt die Vorzugsrichtung längs und/oder quer zur Längsachse des keramischen Substrats, lässt sich hierbei exakt definieren.

Weitere Merkmale und Vorteile der Erfindung ergeben sich aus der folgenden Beschreibung der Erfindung, die im Folgenden unter Bezugnahme auf die eine Figur enthaltende Zeichnung näher erläutert wird.

Fig. 1 stellt idealisiert ein Temperaturverhalten der Durchbiegung 1 eines durch einen DCB-Prozess hergestellten Metall-Keramik-Substrats gemäß der Erfindung dar. Die Durchbiegung 1 ist in Fig. 1 als Funktion der Temperatur T aufgetragen. Die Durchbiegung 1 ist positiv, wenn sie in die Richtung der plastischeren Metallschicht (Grobkorn) erfolgt, und negativ, wenn sie in die Richtung der weniger plastischen Metallschicht (Feinkorn) erfolgt.

Fig. 1 ist eine Hysterese-Kurve zu entnehmen, wobei die durch den Pfeil 2 angegebene Richtung dem Aufheizen des Metall-Keramik-Substrats entspricht und die durch den Pfeil 3 angegebene Richtung dem Abkühlen des Metall-Keramik-Substrats entspricht.

Das in Fig. 1 dargestellte Temperaturverhalten ist beispielhaft für ein Metall-Keramik-Substrat dargestellt, das eine Metallisierung auf seiner Oberseite mit R_{p0,2} = 50 MPa (Feinkorn) und auf seiner Unterseite mit R_{p0,2} = 30 MPa (Grobkorn) als einzige Asymmetrie aufweist. Ansonsten sind beide Metallisierungen aus demselben Metall (Kupfer) gebildet und weisen dieselbe Dicke auf.

Durch das Aufheizen 2 dehnen sich die beiden Metallschichten gegenüber der Keramik stärker aus. Unter Vernachlässigung des Einflusses der Korngröße auf das E-Modul des Kupfers wird symmetriebedingt keine Verformung des Substrats auftreten, bis über die Temperatur T und den Unterschied der thermischen Ausdehnungskoeffizienten die Dehngrenze 4 der plastischeren Metallisierungsseite beim Aufheizen 2 erreicht wird. Zu diesem Zeitpunkt beginnt der Spannungsabbau durch plastisches Fließen in der plastischeren Metallisierungsschicht, während die Metallisierungsschicht mit einer höheren Dehngrenze noch weitgehend elastisch verformt. Somit verformt sich das Metall-Keramik-Substrat konkav in Richtung der Metallisierung der höheren Dehngrenze (weniger plastische Metallschicht). Bei weiterer Erhöhung der Temperatur T und somit der Spannung zwischen den Metallisierungen und der Keramik wird dann auch die Dehngrenze 5 der Metallisierungsseite mit der höheren Dehngrenze beim Aufheizen erreicht. Ab diesem Zeitpunkt verformen sich beide Metallisierungsschichten plastisch und die Steigung der Durchbiegung 1 als Funktion der Temperatur T flacht ab.

Der in Fig. 1 dargestellte Parameter a wird bestimmt durch den Unterschied der Dehngrenzen der beteiligten Metallschichten.

Das vorstehend beschriebene Metall-Keramik-Substrat sowie das Verfahren zu dessen Herstellung sind nicht auf die hierin offenbarte Ausführungsform beschränkt, sondern umfassen auch gleich wirkende weitere Ausführungsformen.

In bevorzugter Ausführung wird das Metall-Keramik-Substrat zur Herstellung von elektrischen Schaltkreisen, insbesondere Leistungsschaltkreisen, verwendet.

### Bezugszeichenliste:

- 1: Durchbiegung
- 2: Aufheizen des Metall-Keramik-Substrats
- 3: Abkühlen des Metall-Keramik-Substrats
- 4: Dehngrenze der plastischeren Metallschicht beim Aufheizen erreicht
- 5: Dehngrenze der weniger plastischen Metallschicht beim Aufheizen erreicht
- 6: Dehngrenze der plastischeren Metallschicht beim Abkühlen erreicht
- 7: Dehngrenze der weniger plastischen Metallschicht beim Abkühlen erreicht

- T: Temperatur

## Patentansprüche

1. Verfahren zur Herstellung eines Metall-Keramik-Substrats, das eine Keramikplatte oder Keramikschicht und zwei an zwei gegenüberliegenden Oberflächenseiten der Keramikschicht flächig befestigte Metallschichten aufweist, umfassend wenigstens die Schritte:
- Bereitstellen einer Keramikaufschlämmung auf einer Sinterhilfe,
- Erhitzen der Keramikaufschlämmung auf eine Sintertemperatur, um eine Keramikschicht zu erhalten,
- Abkühlen der Keramikschicht,
- Belegen der ersten Oberflächenseite der Keramikschicht mit der ersten Metallschicht und/oder Belegen der der ersten Oberflächenseite gegenüberliegenden zweiten Oberflächenseite der Keramikschicht mit der zweiten Metallschicht,
- Erhitzen der in dem vorhergehenden Schritt gebildeten Anordnung aus der Keramikschicht und der/den Metallschicht/en auf eine Bondtemperatur zur Ausbildung eines Verbunds zwischen der Keramikschicht und der/den Metallschicht/en durch Bonden,
- Abkühlen der Anordnung aus der Keramikschicht und der/den Metallschicht/en,
- Wiederholen der vorhergehenden drei Schritte, falls bei diesen lediglich eine Oberflächenseite der Keramikschicht mit einer Metallschicht gebondet wurde, bis beide Oberflächenseiten der Keramikschicht mit jeweils einer Metallschicht gebondet sind, wobei
die Keramikschicht mit Metallschichten unterschiedlicher Dehngrenzen gebondet wird, wobei die unterschiedlichen Dehngrenzen mittels unterschiedlicher Korngrößen in beiden Metallschichten vorherbestimmt werden.

2. Verfahren nach dem vorhergehenden Anspruch,
wobei die Keramikschicht zunächst nur mit einer Metallschicht belegt, erhitzt und abgekühlt wird, wobei die Anordnung aus der Keramikschicht und der Metalischicht nach dem Abkühlen kaltverformt wird.

3. Verfahren nach einem der Ansprüche 1 und 2,
wobei die Anordnung aus der Keramikschicht und der/den Metallschicht/en auf einer unterliegenden, gewölbten Bondhilfe erhitzt und gebondet wird.

4. Verfahren nach einem der Ansprüche 1 bis 3,
wobei die Keramikaufschlämmung auf einer gewölbten Sinterhilfe erhitzt und gesintert wird.

## Claims

1. Method of manufacturing a metal-ceramic-substrate which comprises a ceramic plate or ceramic layer and two metal layers which are attached at two opposing surface sides of the ceramic layer in a laminar manner, encompassing at least the steps:
- providing a ceramic suspension on a sintering aid,
- heating the ceramic suspension to a sintering temperature to obtain a ceramic layer,
- cooling the ceramic layer,
- covering the first surface side of the ceramic layer with the first metal layer and/or covering the second surface side of the ceramic layer which is opposing the first surface side with the second metal layer,
- heating the arrangement of the ceramic layer and the metal layer/s which is formed in the preceding step to a bonding temperature for forming a composite between the ceramic layer and the metal layer/s by bonding,
- cooling the arrangement of the ceramic layer and the metal layer/s,
- repeating the previous three steps, if only one surface side of the ceramic layer was bonded with a metal layer, until both surface sides of the ceramic layer are bonded with respectively one metal layer, wherein
the ceramic layer is bonded with metal layers of different elastic limits, wherein the different elastic limits are predetermined by different grain sizes in both metal layers.

2. Method according to the preceding claim,
wherein the ceramic layer is at first only covered with one metal layer, heated, and cooled, wherein the arrangement of the ceramic layer and the metal layer is cold-formed after cooling.

3. Method according to one of the claims 1 and 2,
wherein the arrangement of the ceramic layer and the metal layer/s is heated and bonded on an underlying curved bonding aid.

4. Method according to one of the claims 1 to 3,
wherein the ceramic suspension is heated and sintered on a curved sintering aid.

## Revendications

1. Procédé de fabrication d'un substrat céramique-métal comprenant une plaque de céramique ou une couche de céramique et deux couches métalliques fixées à plat sur deux côtés de surface opposés de la couche de céramique, comprenant au moins les étapes consistant à :
- fournir une suspension céramique sur un support de frittage,
- chauffer la suspension céramique à une température de frittage pour obtenir une couche céramique,
- refroidir la couche céramique,
- revêtir le premier côté de surface de la couche céramique avec la première couche métallique et/ou revêtir le deuxième côté de surface de la couche céramique opposé au premier côté de surface avec la deuxième couche métallique,
- chauffer l'ensemble formé par la couche céramique et la ou les couches métalliques obtenu à l'étape précédente à une température de liaison pour former une association entre la couche céramique et la ou les couches métalliques par liaison,
- refroidir l'ensemble formé par la couche céramique et la ou les couches métalliques,
- répéter les trois étapes précédentes si un seul côté de la surface de la couche céramique a été lié à une couche métallique, jusqu'à ce que les deux côtés de la surface de la couche céramique soient chacun liés à une couche métallique,
la couche céramique étant liée à des couches métalliques de différentes limites d'élasticité, les différentes limites d'élasticité étant prédéterminées au moyen de tailles de grain différentes dans les deux couches métalliques.

2. Procédé selon la revendication précédente,
dans lequel la couche de céramique n'est tout d'abord recouverte que d'une couche métallique, chauffée et refroidie, l'ensemble formé par la couche de céramique et la couche métallique étant travaillé à froid après refroidissement.

3. Procédé selon l'une quelconque des revendications 1 et 2,
dans lequel l'ensemble formé par la couche céramique et la ou les couches métalliques est chauffé et lié à un auxiliaire de liaison incurvé sous-jacent.

4. Procédé selon l'une quelconque des revendications 1 à 3,
dans lequel la suspension de céramique est chauffée et frittée sur un support de frittage incurvé.
